# EUROPEAN PATENT APPLICATION

(11) **EP 4 434 613 A1**
(43) Date of publication of application: **25.09.2024**
(21) Application number: 23163526.9
(22) Date of filing: 22.03.2023
(51) Int. Cl.: B01D 67/00, B01D 71/16, B01D 71/68

(54) **FABRICATION OF MEMBRANES VIA COMBINED EVAPORATION- AND PRECIPITANT-INDUCED PHASE SEPARATION**

(71) Applicant: Sartorius Stedim Biotech GmbH, 37079 Göttingen (DE)
(72) Inventor: Schleuß, Tobias, 37434 Wollbrandshausen (DE); van der Kruijs, Sandra, 34125 Kassel (DE); Warnke, Catharina, 37120 Bovenden (DE); Schwellenbach, Jan, 37127 Dransfeld (DE)
(74) Representative: Müller-Boré & Partner Patentanwälte PartG mbB

(57) **Abstract**

The present invention relates to an ultrafiltration membrane and to a method for producing the same.

## Description

The present invention relates to an ultrafiltration membrane and to a method for producing the same.

Ultrafiltration membranes are in general characterized by very narrow pore sizes between 2 - 100 nm (Terminology for membranes and membrane processes. In: Journal of Membrane Science, 120, 149-159, 1996.) and are used for separation/purification processes on a molecular level. In terms of the retentive properties of the membranes, a similar definition may be made on the basis of the *molecular weight cut-off* (MWCO). The MWCO relates to the dissolved compound (generally dextrans) having the lowest molecular weight, in daltons, for which a fraction of 90% of the dissolved compound is retained by the membrane, or alternatively to the molecular weight of the molecule, in daltons, for which a fraction of 90% of the molecules having this molecular weight is retained by the membrane. For example, a membrane having an MWCO of 10 kDa retains dextrans of 10 kDa and larger to an extent of at least 90%. Common operations, which are performed via ultrafiltration are the concentration of target molecules, buffer exchange or elimination of impurities by size exclusion.

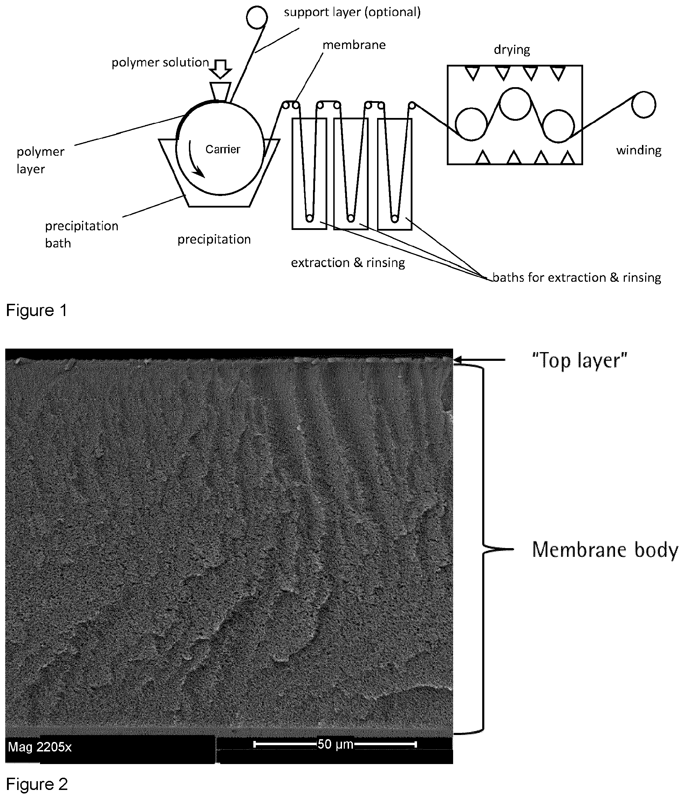

The production of ultrafiltration membranes is commonly achieved by a process scheme as schematically shown in Figure 1. Said process scheme involves producing a solution of the membrane-forming polymer in a suitable solvent which may include further additives if needed (hydrophilizing or pore forming agents), casting the solution in a defined thickness on a suitable carrier (endless steel belt, steel drum), transporting the solution film into a non-solvent bath to induce the phase separation process, and extracting, washing, drying, and winding of the formed membrane film.

Besides chemical and physical characteristics, such as thickness, burst pressure, porosity, resistance against solvents/acids/bases, the membrane can be mainly characterized by its permeability P and rejection R profile. In general, it is desired to produce a membrane with a very high permeability at a given rejection profile. This leads to faster processing in nearly all unit operations while maintaining the needed separation efficiency.

Permeability and rejection are determined by different structural properties of the membrane. The rejection is determined by the size of the smallest pores in the membrane. For ultrafiltration membranes, these are located at the top layer (cf. Figure 2). The permeability is determined by the pore size (gradient) in the whole membrane. High permeabilities at a given rejection profile can especially be achieved by a membrane with a high degree of asymmetry having small pores in the desired range at the membrane top layer followed by a steep gradient to larger pores to the bottom layer.

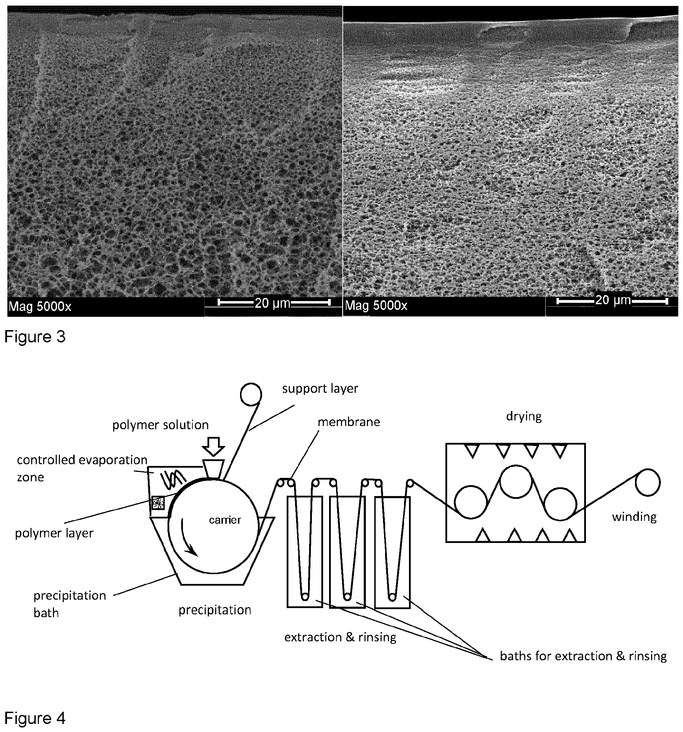

The pore size at the top layer as well as the pore size gradient can be tailored by the properties of the polymer solution and the membrane production process to a certain extent. This can be used to improve the ratio of rejection to permeability to achieve more desirable membrane properties. Examples of ultrafiltration membranes showing a similar rejection profile but a different permeability due to differences in the pore size gradient are illustrated in Figure 3. Using the common approach of membrane formation as shown in Figure 1, the achievable ratio of rejection to permeability is, however, limited by the thermodynamic and kinetic aspects of the membrane formation itself.

The pore size at each position within the membrane is determined by the polymer content in the casting solution at the onset of phase separation as well as the coalescence time between the onset of phase separation and the solidification of the membrane body. Therefore, a feasible approach to achieve small pores at the membrane top layer as well as larger pores in the membrane body is to use two layered polymer solutions for membrane formation, namely a thin layer of a solution containing a high amount of polymer to form the top layer as well as a larger layer of a solution containing low amount of polymer to form larger pores in the membrane body. This approach, however, is laborious as it needs a precise control of layer thickness as well as twice the amount of mixing, pumping and layering technology.

Thus, the technical problem underlying the present invention is to provide an ultrafiltration membrane which has an improved ratio of rejection to permeability in an efficient and fast way.

The solution to the above technical problem is achieved by the embodiments characterized in the claims.

In particular, the present invention relates to a method for producing an ultrafiltration membrane, comprising the steps of:
(a) providing a polymer solution comprising a polymer, a high volatile solvent, a low volatile solvent, and a non-solvent,
(b) applying the polymer solution to the surface of a carrier or to a support layer to form a polymer layer on the carrier or on and/or partially or completely in the support layer,
(c) transporting the polymer layer from step (b) with the optional support layer through an (controlled) evaporation zone for partially evaporating the high volatile solvent under a relative humidity of less than 20 %RH, and
(d) introducing the polymer layer from step (c) with the optional support layer into a precipitation bath which comprises a precipitant, relative to the polymer in the polymer layer/solution.

From the method of the present invention an ultrafiltration membrane is obtainable that achieves superior ratios of rejection to permeability by applying a single layer approach combining precipitant-induced phase separation and evaporation-induced phase separation. This is achieved by using a combination of solvents in the polymer solution. One solvent is highly volatile (i.e. high volatile solvent) while the other solvent is hardly volatile (i.e. low volatile solvent). The membrane formation process includes an additional evaporation zone, where the high volatile solvent evaporates from only the top portion of the polymer solution film. The process is schematically illustrated in Figure 4. Preferably, the method of the present invention comprises only one polymer solution application step and, thus, besides step (b) no further polymer solution application steps.

No additional machine equipment is preferably needed compared to common approaches. Preferably, no toxic solvents or other substances of very high concern are used. Reduction of production cost due to the new process design is preferably possible. Moreover, a simple control of critical process parameters (equilibrium state) is preferably possible.

The partial evaporation of the high volatile solvent leads to a higher polymer concentration near the membrane top portion. The structure finalization during the precipitation step leads to a conservation of this characteristic and consequently to a more asymmetric membrane structure. This yields to rejection rates at higher membrane permeability enabling faster separation processes.

In the present invention the term "ultrafiltration membrane" refers to a membrane having an MWCO of 1 kDa to 1000 kDa. The determination of the molecular weight cut-off can be carried out in accordance with the US standard ASTM E1343-90 ("Standard test method for molecular weight cutoff evaluation of flat sheet ultrafiltration membranes").

For pore sizes of at least 0.1 µm, i.e. for microfiltration membranes with an average pore size of 0.1 to 10 µm, capillary flow porometry is used to determine the pore size. This is a gas/liquid porosimetry in which the differential gas pressures and flow rates through a membrane sample are measured first in the wet and then in the dry state. Prior to measurement, the membrane sample is brought into contact with a wetting liquid in such a way that all pores are filled with this liquid. After the pores have been filled and the sample has been introduced, the measuring cell must be closed and the measurement started. After starting the measurement, the gas pressure is automatically and gradually increased and the pore diameters corresponding to the applied pressure are emptied by the gas pressure. This is continued until the relevant pore range has been covered, i.e. until even the smallest pores present in the measuring range have been freed of liquid. The pressure is then reduced again and the measurement is repeated automatically on the now dry sample. The pore size distribution is calculated from the difference between the two pressure-flow rate curves using the Young-Laplace equation (see also A. Shrestha, "Characterization of porous membranes via porometry", 2012, Mechanical Engineering Graduate Theses & Dissertations, Paper 38, University of Colorado at Boulder).

For the determination of pore sizes larger than 10 µm and up to 1 mm, the image analysis based method described in Journal of Membrane Science 372 (2011), pages 66 to 74, can be used.

For pore sizes less than 0.1 µm, the liquid-liquid displacement method, which has similarities to capillary flow porometry, is used. However, instead of the gas flow rates, the flow rates of the displacing liquid are measured as a function of the differential pressure increase (see also R. Dávila, "Characterization of ultra and nanofiltration commercial filters by liquid-liquid displacement porosimetry", 2013). Due to complexity of the method, cut-offs are determined by filtering model substances and generating sieve curves indicating cut-off behavior of the membranes over a range of molecular weights (cf. ASTM E1343-90).

In accordance with the present invention, in step (a), a polymer solution comprising a polymer, a high volatile solvent, a low volatile solvent, and a non-solvent is provided. Any known means for providing a respective polymer solution can be applied.

The polymer(s) used for producing the ultrafiltration membrane are not subject to any special restrictions. Use may therefore be made of any one or more polymers suitable for membrane formation. The polymers in solution in the polymer solutions (the membrane-forming polymers) can for example be polyethersulfone (PES), polysulfone, polyphenylensulfone, polyetherimide, cellulose acetate (CA), such as cellulose diacetate and cellulose triacetate, cellulose ester, and cellulose ether. The polymer solution may comprise one or more, preferably one, of these membrane-forming polymers. The membrane-forming polymers are preferably polyethersulfone and/or cellulose acetate. Most preferably, polyethersulfones are used as membrane-forming polymer(s).

The high volatile and the low volatile solvent are not particularly limited apart from the corresponding high and low volatility, respectively. In this respect, the term "high volatility" means that the respective substance has a boiling temperature of less than 100°C at 1013 hPa and a vapor pressure of at least 50 hPa at 20°C. A high volatile solvent has a boiling point (bp) of less than 100°C at 1013 hPa and a vapor pressure of at least 50 hPa at 20°C (vp). A low volatile solvent has a boiling point of at least 100°C at 1013 hPa and a vapor pressure of less than 50 hPa at 20°C (see also DIN 53170). The high and low volatile solvents are both preferably mixable with the precipitation bath liquid. In particular the high and low volatile solvents are preferable mixable with water in case of an aqueous precipitation bath.

Examples of the high volatile solvent are acetone (bp 56°C, vp 246 hPa), formaldehyde (bp -19°C, vp 4400 hPa), tetrahydrofuran (bp 65°C, vp 170 hPa), methyl acetate (bp 57°C, vp 228 hPa), methyl ethyl ketone (bp 80°C, vp 105 hPa), methyl formate (bp 32°C, vp 638 hPa), and ethyl formate (bp 54°C, vp 266 hPa). Boiling points (bp) at 1013 hPa and vapor pressures (vp) at 20°C are given in parentheses. Preferably, the high volatile solvent is selected from the group consisting of acetone, methyl acetate, methyl formate, and ethyl formate. Said solvents can be used alone or in any combination. Preferably, one high volatile solvent is used. High volatile solvents, such as acetone, methyl acetate, methyl formate, ethyl formate, and tetrahydrofuran, are beneficial, due to their low viscosity leading to lower viscosities of the casting solution/polymer solution, which results to an improved processibility compared to casting solutions with higher viscosities (and same amount of solid).

The low volatile solvent can for example be 2-pyrrolidone (bp 245°C, vp 0.04 hPa), N-methyl-2-pyrrolidone (bp 203°C, 0.32 hPa), N-n-butyl-2-pyrrolidone (bp 240.6 °C, vp 0.13 hPa, *SDS Carl Roth),* dimethylacetamide (bp 165°C,vp 3.3 hPa), 2-hydroxy-N,N-dimethylpropanamide (bp at least 224°C at 1031 hPa, vp 0.12 hPa or less, *SDS Sigma Aldrich*), dihydrolevoglucosenone (bp 227°C at 1007 hPa, vp 0.28 hPa at 25°C, SDS *Sigma Aldrich*), DMSO (bp 189°C, vp 0.556 hPa), and DMF (bp 153°C, vp 3.77 hPa). Preferably, the low volatile solvent is selected from the group consisting of 2-pyrrolidone, N-n-butyl-2-pyrrolidone, dihydrolevoglucosenone, and 2-hydroxy-N,N-dimethylpropanamide. Said solvents can be used alone or in any combination. Preferably, one low volatile solvent is used. When using non REACH solvents such as 2-pyrrolidone, N-n-butyl-2-pyrrolidone, 2-hydroxy-N,N-dimethylpropanamide, and dihydrolevoglucosenone it is advantageously possible to obtain a membrane with content of REACH materials below detectable limits or with no REACH materials.

REACH is a European regulation, which aims to improve the protection of human health and the environment from the risks that can be posed by chemicals. On basis of this regulation by ECHA (European Chemical Agency) the production and/or use of certain substances is forbidden in the European Union or strictly limited. Some substances are prone to be or most likely to be forbidden. These "candidates" are also unfavorable for use. Herein, the term "REACH materials" refers to both types of materials, already forbidden ones as well as potential candidates. The term "non REACH" implies the beneficial state of a substance (solvent) not being registered as material of concern. Examples of current beneficial solvents are acetic acid, acetone, N-n-butyl-2-pyrrolidone, dihydrolevoglucosenone, ethanol, isopropanol, ethyl formate, glycerol, glycerol-1,3-diacetate, glycerol triacetate, methyl acetate, 2-hydroxy-N,N-dimethylpropanamide, 2-pyrrolidone, 2,2-dimethyl-1,3-dioxolane-4-methanol, tetrahydrofuran, and water. The term "detectable content" means a content of 50 µg/mL or more, e.g. after extraction with 1 mL extraction liquid (e.g. water or ethanol) on 6 cm² membrane surface after 24h at a temperature of 60°C to 80°C.

The polymer solution further comprises a non-solvent for the polymer in question. The term "non-solvent" in this context refers to a liquid which is unable to dissolve the membrane-forming polymer. The non-solvent for the membrane-forming polymer (or each of the membrane-forming polymers) preferably has a solubility under standard conditions of (in each case) at most 1 wt%, very preferably at most 0.1 wt%.

If the polymer solution comprises a non-solvent or another precipitant for the corresponding membrane-forming polymer, the maximum concentration of the non-solvent (or precipitant) is a concentration not sufficient to lead to precipitation of the membrane-forming polymer. The polymer solution consists preferably of the high volatile solvent and the low volatile solvent for the corresponding membrane-forming polymer, the corresponding membrane-forming polymer, and a non-solvent (mixture).

Suitable non-solvents are, for example, water, glycerol, methanol, ethanol, n-propanol, and iso-propanol, as well as mixtures thereof. Unless otherwise specified, the above definitions and observations relating to non-solvents are valid analogously for all aspects of the present invention. Preferably, the non-solvent is water.

The polymer solution may comprise 10 to 35 wt% of the (membrane-forming) polymer, 5 to 70 wt% of the high volatile solvent, 20 to 80 wt% of the low volatile solvent, and 0.1 to 15 wt% of a non-solvent, with respect to the total mass of the polymer solution. The content of the high volatile solvent is preferably 5 to 60 wt%, more preferably 10 to 50 wt% with respect to the total mass of the polymer solution. The content of the low volatile solvent is preferably 20 to 70 wt% with respect to the total mass of the polymer solution. The content of the non-solvent is preferably 0.5 to 15 wt%, more preferably 1.0 to 10 wt% with respect to the total mass of the polymer solution. In case of more than one (membrane-forming) polymer, high volatile solvent, low volatile solvent, and/or non-solvent is included in the polymer solution, the above amounts refer to the total of the respective component.

The polymer solution may further comprise one or more additives. Suitable additives are, for example, swelling agents, solubilizers, hydrophilizing agents, and/or pore formers (porogens). Respective additives are known to the skilled person and are adapted to the membrane-forming polymer. For example, polyethylene glycol (PEG), especially PEG 1000 or PEG 2000, glycerol or polyvinylpyrrolidone (PVP) may be used as swelling agents or pore formers. Such additives may be contained in the polymer solution in an amount of 0 to 10 wt%. The polymer solution consists preferably of the corresponding membrane-forming polymer, the high volatile solvent, the low volatile solvent, a non-solvent, and optionally one or more additives, preferably pore formers and/or swelling agents.

The polymer solution does not have to be subjected to any defined thermal pretreatments - i.e., it is not necessary to utilize a thermal pretreatment for membrane/structure formation. More particularly the polymer solutions preferably do not have any lower or upper critical solution temperatures.

In accordance with the present invention, in step (b), the polymer solution is applied to the surface of a carrier or to a support layer to form a polymer layer on the carrier or on and/or partially or completely in the support layer. This produces a (singly) coated support layer transported with a carrier (as shown schematically in Figure 4). For non-supported membranes the polymer solution can be directly applied to the carrier. In a different setup, a casting solution can be applied directly to a freely floating, hanging or spanned support layer e.g. with a die or a falling curtain or by moving it through a compartment containing the polymer solution. Preferably, the carrier optionally with the support layer is/are used. Methods of applying the polymer solution are known to the skilled person from the prior art and can be used without special limitations in the method of the present invention. Such methods are, for example, methods in which the carrier and/or the support layer is/are conveyed, for example, past a doctor blade system or a slot die, from which the corresponding polymer solution emerges. Step (b) takes place preferably using a slot die.

In step (b) the polymer solution may penetrate partially or completely into the optional support layer. For example, the polymer layer may penetrate into the support layer to an extent of at least 25%, preferably at least 50%, more preferably at least 75%. Preferably, the polymer layer penetrates into the support layer to an extent of less than 100%.

The support layer is not particularly limited. It is possible, therefore, to use all support layers known to the skilled person from the prior art. For example, the support layer may be a nonwoven web, a woven fabric or an open microfilter membrane. Examples of nonwoven webs are polyolefin nonwovens, such as, for example, PP/PE core-shell nonwovens, and polyester nonwovens. The support layer is preferably a polyolefin nonwoven or a polyolefin membrane.

The thickness of the support layer may be, for example, from 30 to 300 µm, preferably from 50 to 250 µm, more preferably from 80 to 200 µm.

Any carrier suitable for membrane production methods from the prior art may be used. The carrier preferably has a planar surface and is inert with respect to the substances used (e.g., polymer solution and its constituents). Serving preferably as carrier is a moving belt (conveyor belt) or a drum (as shown schematically in Figure 4), each preferably made of steel, or a plastic foil, whereby a continuous implementation of the method can be enabled.

In one preferred embodiment the carrier and/or the support layer in step (b) move(s) at a speed of 30 to 500 m/h, more particularly of 60 to 400 m/h, very preferably of 100 to 300 m/h, relative to the polymer solution during application thereof. In other words, the carrier and/or the support layer is/are conveyed at the above-stated speeds, for example, past a doctor blade system or a slot die for application of the polymer solution.

The application temperature in step (b) may be from 4°C to (bp of the (lowest boiling) high volatile solvent - 20% (with respect to the bp of the (lowest boiling) high volatile solvent in °C)), more preferably from 4°C to (bp of the (lowest boiling) high volatile solvent - 25%), and most preferably from 4°C to (bp of the (lowest boiling) high volatile solvent - 30%). For example, in case the boiling point of the (lowest boiling) high volatile solvent is 100°C, a range of 4°C to (bp of the (lowest boiling) high volatile solvent - 20%) means a range of 4°C to (100°C - 20°C) = 4°C to 80°C.

In accordance with the present invention, in step (c), the polymer layer from step (b) (with the optional support layer) is transported through an evaporation zone for partially evaporating the high volatile solvent under a relative humidity of less than 20 %RH. For this purpose, the polymer layer (with the optional support layer) can be transported with the same carrier as used in step (b) or together with the support layer by suitable transporting means known in the art. The term "partially" is thereby not particularly limited. For example, at least 0.01 wt% of the high volatile solvent with respect to 100 wt% of the high volatile solvent in the (initial) polymer solution are evaporated. Preferably, at least 0.02 wt%, more preferably at least 0.04 wt%, and/or at most 2.0 wt%, more preferably at most 0.5 wt%, of the high volatile solvent with respect to 100 wt% of the high volatile solvent in the (initial) polymer solution are evaporated.

To determine the amount of high volatile solvent from a film of the respective polymer solution the solution can be cast on a substrate and placed on a lab balance under the given conditions used for the casting process. The total decrease in weight can in close approximation be considered as the total amount of evaporated high volatile solvent, since vapor pressures of further components are orders of magnitude lower than the vapor pressure of the high volatile solvent. The extent of evaporation of the high volatile solvent can for example be controlled by the evaporation time and the temperature in step (c).

For example, the evaporation time in step (c) can be from 0.50 s to 1.0 min, preferably from 2.0 s to 20 s, more preferably from 5.0 s to 15 s. When applying such an evaporation time, sufficient and non-excessive evaporation of the high volatile solvent is achieved, while suppressing evaporation of the low volatile solvent. This results in a firm skin structure/top portion for high retention, which however is thin enough to avoid additional resistance to the membrane.

The temperature in step (c) may be from 4°C to (bp of the (lowest boiling) high volatile solvent - 20% (with respect to the bp of the (lowest boiling) high volatile solvent in °C)), more preferably from 4°C to (bp of the (lowest boiling) high volatile solvent - 25%), and most preferably from 4°C to (bp of the (lowest boiling) high volatile solvent - 30%). The application temperature in step (b) is preferably the same temperature or lower than the temperature in step (c). Preferably, the application temperature in step (b) is lower than the temperature in step (c). The mentioned temperatures preferably allow preventing the formation of bubbles in the membrane film which could lead to major defects. When applying such temperatures, sufficient and non-excessive evaporation of the high volatile solvent is achieved, while suppressing evaporation of the low volatile solvent.

The evaporation zone enables control of the atmosphere with respect to humidity, temperature and optionally air flow conditions. In particular, the humidity in the evaporation zone is reduced compared to the surrounding preferably to less than 20 %RH, more preferably less than 18 %RH, more preferably less than 15 %RH, more preferably less than 10 %RH, and most preferably from 0 to 5 %RH at the temperature used in step (c). Typically, this may allow to avoid an opposite effect (i.e. opening of the membrane at the top portion) caused by water diffusing into the membrane when compared to the present invention. The desired relative humidity (RH) can for example be adjusted by introducing a dry gas, preferably an inert gas such as nitrogen or carbon dioxide into the evaporation zone.

In accordance with the present invention, in step (d), the polymer layer from step (c) (with the optional support layer) is introduced into a precipitation bath which comprises a precipitant, relative to the polymer in the polymer layer/solution (as shown schematically in Figure 4). The precipitant used in step (d) is not subject to any special limitation. In accordance with the invention the same precipitants may be used as in conventional production methods for polymer membranes. The precipitant results in precipitation (phase inversion) of the membrane-forming polymer in the polymer layer. The precipitant may be a single compound or a mixture of two or more compounds. In the precipitation bath the precipitant is preferably present in a liquid, more preferably, in the precipitation bath, the precipitant is itself a liquid or the precipitation bath consists of the precipitant. The precipitant is preferably a non-solvent for the membrane-forming polymer(s) with the precipitation bath preferably consisting of a precipitant selected from the group consisting of water, alcohols and additized water. More preferably, the precipitation bath consists of water as the precipitant. The precipitant may be the same as the non-solvent contained in the polymer solution.

The temperature of the precipitation bath is not subject to any special restrictions. For example, the temperature of the precipitation bath may be from 1°C to 60°C, preferably from 3°C to 30°C, more preferably from 4°C to 20°C.

The method of the present invention may further comprise a step of
(e) introducing the polymer layer (with the optional support layer) into one or more rinsing tanks after step (d)
(as shown schematically in Figure 4). The rinsing tanks used in step (e) are not subject to any special restrictions. It is possible to use the same rinsing tanks as in conventional production methods for polymer membranes. Rinsing processes are known to the skilled person and may be chosen in line with the requirements for the membrane (in respect, for example, of residual contaminants, extractables and leachables (extractable and leachable substances, respectively)). Appropriate rinsing tanks may comprise, for example, water, mono- or polyhydric alcohols, or other hydrophilic liquids.

As described above, the polymer solution may comprise a cellulose compound such as cellulose acetate or cellulose ester. In order to obtain the corresponding hydrolysis products, the method of the invention (comprising the steps of (a) - (d) or (a) - (e)) may further comprise a step of
(f) hydrolyzing the cellulose compound.

The hydrolysis methods used in step (f) are not subject to any special restrictions. In accordance with the invention it is possible to use the same hydrolysis methods as in conventional production methods for polymer membranes - for example, by introducing the polymer layer (with the optional support layer) into an alkali tank. Examples of common methods for hydrolysis are described for example in US-7422686-B2. Appropriate alkaline tanks may comprise, for example, 50% KOH in water or in alcohols or in mixtures thereof. The exposure time may be, for example, from 1.0 to 30 min.

The method of the invention may comprise in addition to or alternatively to step (f) a further step of
(g) crosslinking the polymer chains in the polymer layer.

The crosslinking methods used in step (g) are not subject to any special restrictions. In accordance with the invention it is possible to use the same crosslinking methods as in conventional production methods for polymer membranes. Appropriate crosslinking methods are, for example, crosslinking of regenerated cellulose by the method as described for example in US-7422686-B2.

A further aspect of the present invention relates to an ultrafiltration membrane obtained by the method of the invention for producing an ultrafiltration membrane. The above definitions and embodiments apply analogously for this aspect of the present invention. The following definitions and embodiments apply likewise analogously for the method of the invention for producing an ultrafiltration membrane. The ultrafiltration membrane of the invention is preferably a flat membrane.

As described above, the method of the present invention applies a single layer approach. The partial evaporation of the high volatile solvent leads to a higher polymer concentration near the membrane top portion. The structure finalization during the precipitation step leads to a conservation of this characteristic and consequently to a more asymmetric membrane structure. This preferably yields to rejection rates at higher membrane permeability enabling faster separation processes.

The ultrafiltration membrane of the invention preferably comprises a top portion and an asymmetrical membrane body portion, adjacent to the top portion. The top portion corresponds to the part of the polymer layer from which evaporation of the high volatile solvent occurred during step (c). The top portion and the membrane body portion are continuous within the membrane (i.e. with no (defined) interfaces). A first part of the membrane body portion, which is adjacent to the top portion, has an average pore size smaller than an average pore size of a second (opposite) part of the membrane body portion, and the average pore size (continuously or discontinuously) increases from the first part towards the second part of the asymmetrical membrane body portion. A ratio of average pore size between the first part and the second part of the membrane body portion (average pore size of the first part of the membrane body portion/average pore size of the second part of the membrane body portion) is preferably at least 1:10, more preferably at least 1:20, most preferably at least 1:50. An average pore size of the top portion is smaller than an average pore size of the first part of the membrane body portion. The asymmetrical membrane body portion is preferably homogeneous, i.e. (substantially) free of macrovoids.

As used herein, an asymmetrical membrane portion is a membrane portion, in which a first part of the asymmetrical membrane portion has an average pore size smaller than the average pore size of the (opposite) second part of the asymmetrical membrane portion, and the average pore size (continuously or discontinuously) increases from the first part towards the second part of the asymmetrical membrane portion.

The top portion may correspond to 5% or less, preferably 4% or less, more preferably 3% or less, (excluding 0.0%) of the (total) thickness of the membrane. The membrane body portion may correspond to 95% or more, preferably 96% or more, more preferably 97% or more, (excluding 100%) of the (total) thickness of the membrane. Preferably, the ultrafiltration membrane consists of the top portion and the membrane body portion. The membrane body portion includes the optional support layer.

The top portion may have a thickness of from 0.5 µm to 10 µm, preferably from 0.5 µm to 5.0 µm, more preferably from 1.0 µm to 3.0 µm.

The membrane body portion may have a thickness of from 70 µm to 390 µm, preferably from 90 µm to 345 µm, more preferably from 100 µm to 250 µm.

The membrane may have a total thickness of from 80 µm to 400 µm, preferably from 100 µm to 350 µm, more preferably from 120 µm to 280 µm.

Preferably, the membrane does not contain REACH materials in a detectable content and more preferable does not contain any REACH materials.

As defined above, the membrane-forming polymers can be polyethersulfone, polysulfone, polyphenylensulfone, polyetherimide, cellulose acetate, cellulose ester, and cellulose ether. Moreover, cellulose compounds like cellulose acetate or cellulose ester may be subjected to optional hydrolysis (optional step (f)) of the method of the present invention) yielding regenerated cellulose, and regenerated cellulose or other polymers may be subjected to optional crosslinking methods (optional step (g) of the method of the invention). Accordingly, in one preferred embodiment of the ultrafiltration membrane of the invention, the polymer layer comprises polymers selected from the group consisting of polyethersulfone, polysulfone, polyphenylensulfone, polyetherimide, cellulose acetate, regenerated cellulose, crosslinked regenerated cellulose or crosslinked other above mentioned polymer (e.g. crosslinked polyethersulfone or crosslinked polysulfone), cellulose ester, and cellulose ether. The polymer layer may comprise one or more, preferably one, of these polymers. More preferably the polymer layer comprises, more preferably consists of, polyethersulfone and/or cellulose acetate, most preferably polyethersulfone.

There is no particular limitation on the possible use of the membrane of the invention. It may be used for filtration, more particularly for the filtration of viruses, proteins or macromolecules.

A further aspect of the present invention relates to a method for increasing the rejection of an ultrafiltration membrane comprising the step of
exposing a layer of a polymer solution comprising a polymer, a high volatile solvent, a low volatile solvent, and a non-solvent to an evaporation zone under dry atmosphere prior to introduction of the polymer layer into a precipitation bath which comprises a precipitant, relative to the polymer in the polymer solution,
whereby the high volatile solvent partially evaporates from the top portion of the polymer layer. The above definitions and embodiments apply analogously for this aspect of the present invention.

The method for increasing the rejection of an ultrafiltration membrane may comprise a further step prior to, preferably directly prior to, exposing the polymer layer to the evaporation zone of applying the polymer solution to the surface of a carrier or to a support layer to form the polymer layer on the carrier or on and/or partially or completely in the support layer.

In a preferred embodiment of the method for increasing the rejection of an ultrafiltration membrane the evaporation zone under dry atmosphere may be an atmosphere with a relative humidity of less than 40 %RH, preferably less than 30 %RH, more preferably less than 20 %RH or less than 18 %RH, even more preferably less than 15 %RH or less than 10 %RH, and most preferably from 0 to 5 %RH at the temperature used. In another preferred embodiment the residence time in the evaporation zone (evaporation time) is from 0.50 s to 1.0 min, preferably from 2.0 s to 20 s and more preferably from 5.0 s to 15 s.

A further aspect of the present invention relates to the use of an evaporation zone prior to, preferably directly prior to, a precipitation bath in a method for increasing the rejection of an ultrafiltration membrane,
wherein, in the evaporation zone, a high volatile solvent partially evaporates from a top portion of a layer of a polymer solution comprising a polymer, a high volatile solvent, a low volatile solvent, and a non-solvent, under dry atmosphere. The above definitions and embodiments apply analogously for this aspect of the present invention.

The use of an evaporation zone may comprise a further step prior to, preferably directly prior to, the evaporation zone of applying the polymer solution to the surface of a carrier or to a support layer to form the polymer layer on the carrier or on and/or partially or completely in the support layer.

In a preferred embodiment of the use of an evaporation zone the dry atmosphere may be an atmosphere with a relative humidity of less than 40 %RH, preferably less than 30 %RH, more preferably less than 20 %RH or less than 18 %RH, even more preferably less than 15 %RH or less than 10 %RH, and most preferably from 0 to 5 %RH at the temperature used. In another preferred embodiment the residence time in the evaporation zone (evaporation time) is from 0.50 s to 1.0 min, preferably from 2.0 s to 20 s and more preferably from 5.0 s to 15 s.
- Fig. 1:: Schematic drawing of an ultrafiltration membrane production process.
- Fig. 2:: Scanning electron microscopy photograph of the cross-section of a PES ultrafiltration membrane showing the narrow pore size at the top layer as well as a pore size gradient in the membrane body (Mag = magnification).
- Fig. 3:: Scanning electron microscopy photograph of two cellulose acetate ultrafiltration membranes with a high (left) and low (right) degree of asymmetry regarding the pore size in the membrane body portion (Mag = magnification).
- Fig. 4:: Schematic illustration of the ultrafiltration membrane production process of the present invention.
- Fig. 5:: Scanning electron microscopy image of membrane 1 produced in the Examples.
- Fig. 6:: Scanning electron microscopy image of membrane 2 produced in the Examples.
- Fig. 7:: Comparison between the state of the art process (squares) and the combination of evaporation and precipitation for CA membranes produced with a N-n-butyl-2-pyrrolidone and acetone mixture (circles).
- Fig. 8:: Comparison between the state of the art process (squares) and the combination of evaporation and precipitation for PES membranes produced with a N-n-butyl-2-pyrrolidone and acetone mixture (circles).

The present invention will be further illustrated in the following examples without being limited thereto.

### Example 1: Visualization of asymmetry of the membrane body portions

Two different ultrafiltration membranes 1 and 2 were produced applying the method of the present invention using the following conditions:

| | high volatile solvent | low volatile solvent | membrane-forming polymer | non-solvent | evaporation | | |
|---|---|---|---|---|---|---|---|
| | | | | | temperature | duration | RH* |
| 1 | methyl acetate (30 wt%) | N-n-butyl-2-pyrrolidone (50 wt%) | CA (15 wt%) | H₂O (5 wt%) | 20 °C | 30 s | 15% |
| 2 | methyl acetate (35 wt%) | N-n-butyl-2-pyrrolidone (50 wt%) | CA (14 wt%) | H₂O (1 wt%) | 5 °C | 5s | 15% |

| | | | | | | | |
|---|---|---|---|---|---|---|---|
| *: Relative humidity (RH) was adjusted by introducing dry nitrogen gas into the chamber, where evaporation step has been executed. | | | | | | | |

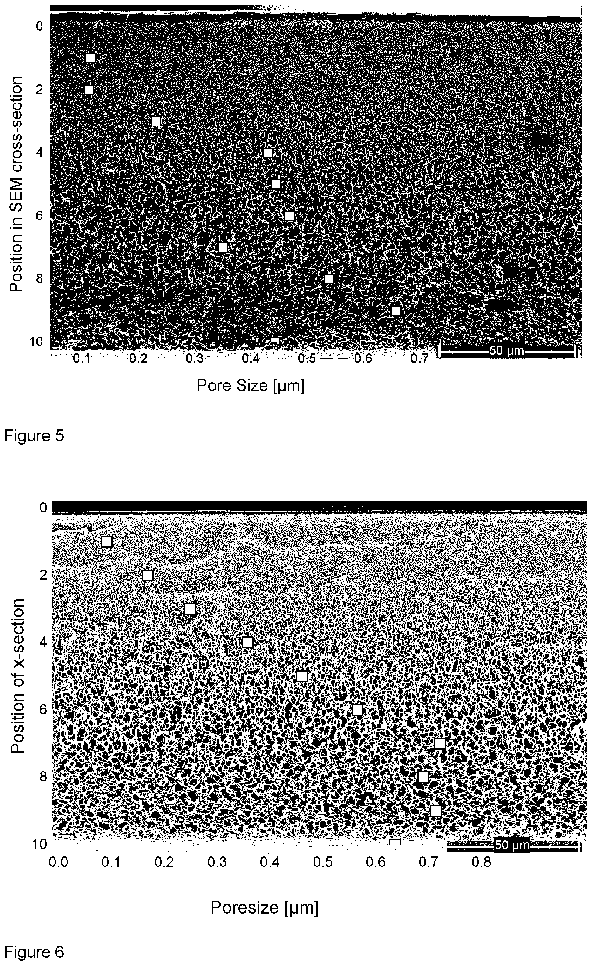

The obtained asymmetry can be visualized by scanning electron microscopy (SEM). The average pore size at ten different horizontal sections throughout the SEM image (membrane cross section; cf. Figures 5 and 6) is determined visually by binarization of the images and plotting the position against the observed pore sizes. Figs. 5 and 6 show the asymmetry of the membrane body portions of membranes 1 and 2.

### Example 2: Determination of the ratio of rejection to permeability

Two further ultrafiltration membranes 3 and 4 were produced applying the method of the present invention using the following conditions:

| | high volatile solvent | low volatile solvent | membrane-forming polymer | non-solvent | evaporation | | |
|---|---|---|---|---|---|---|---|
| | | | | | temperature | duration | RH* |
| 3 | acetone (42 wt%) | N-n-butyl-2-pyrrolidone (38 wt%) | CA (17 wt%) | H₂O (3 wt%) | 35 °C | 12 s | 7.5% |
| 4 | acetone (10 wt%) | N-n-butyl-2-pyrrolidone (64.5 wt%) | PES (25 wt%) | H₂O (0.5 wt%) | 20 °C | 24 s | 5% |

| | | | | | | | |
|---|---|---|---|---|---|---|---|
| *: Relative humidity (RH) was adjusted by introducing dry nitrogen gas into the chamber, where evaporation step has been executed. | | | | | | | |

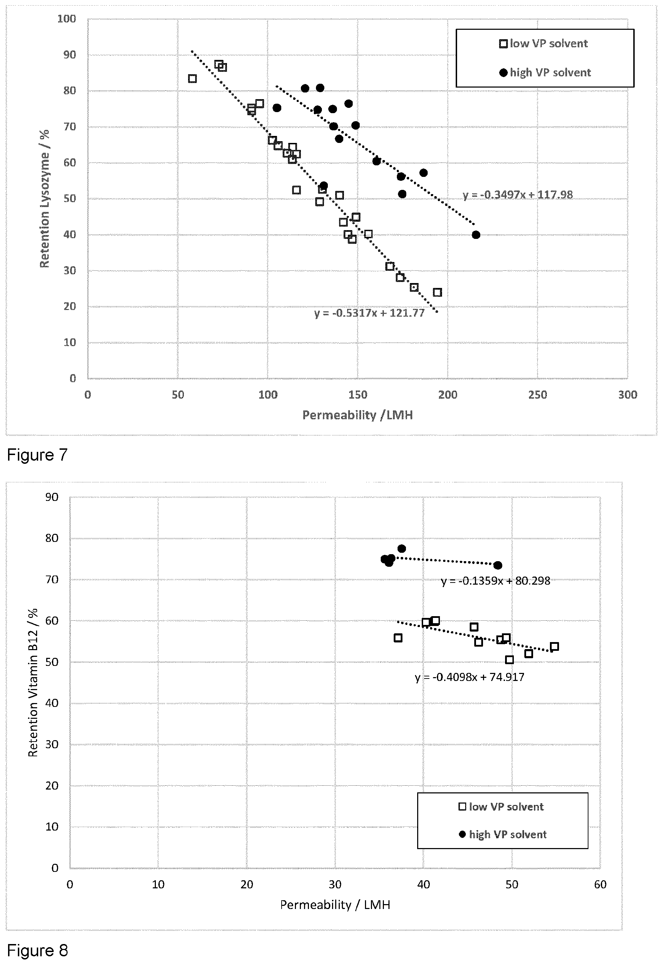

Moreover, analogous CA and PES membranes were produced applying the state of the art process as shown in Figure 1. The membranes produced applying only low volatile solvents or with no (controlled) evaporation (Fig.1) show a lower performance, which can be visualized by plotting the retention of a probe molecule versus the buffer flux as shown in Figs. 7 and 8.

The partial evaporation of the high volatile solvent leads to a higher concentration of polymer in the top portion of the membrane and as a direct consequence to smaller pore sizes. Furthermore, this results in a higher degree of asymmetry of the whole membrane body. A higher degree of asymmetry yields a higher permeability at the same rejection rate compared to a more symmetric membrane.

In the field of ultrafiltration membranes the assessment of the degree of asymmetry is difficult as the pore sizes of the top portion are so small that they cannot be visualized by conventional microscopy methods. Only the larger pores on the other side of the membrane can be assessed by optical methods.

To accurately determine the degree of asymmetry the following method is presented:
- The rejection towards a desired target molecule is determined via simulated crossflow filtration. The target molecule depends on the rejection range of the membrane and is not limited to one specific molecule.
- The average pore size 50 µm away from the top portion is determined via SEM. An average of at least 10 pore diameters is calculated.
- The product of rejection rate and pore size average reflects the asymmetry of the membrane. A high value equals a high degree of asymmetry.

The specific membrane characteristics concerning rejection and permeability can be described via a plot of rejection rate of a specific target molecule (here: lysozyme (Fig. 7) and vitamin B12 (Fig. 8), respectively) over membrane permeability. The values for membranes produced according to the present invention show throughout a higher flux at a given retention or a higher retention at a given flux. As shown in Figs. 7 and 8, an improved performance with respect to the rejection/permeability ratio is obtained by membranes produced by the method of the present invention when compared to corresponding membranes produced by a conventional process. This can lead to a higher flux at a given retention like for CA membranes (Fig. 7) or a higher retention at a given flux as for PES membranes (Fig. 8) compared to state of the art methods.

## Claims

1. A method for producing an ultrafiltration membrane, comprising the steps of:
(a) providing a polymer solution comprising a polymer, a high volatile solvent, a low volatile solvent, and a non-solvent,
(b) applying the polymer solution to the surface of a carrier or to a support layer to form a polymer layer on the carrier or on and/or partially or completely in the support layer,
(c) transporting the polymer layer from step (b) with the optional support layer through an evaporation zone for partially evaporating the high volatile solvent under a relative humidity of less than 20 %RH, and
(d) introducing the polymer layer from step (c) with the optional support layer into a precipitation bath which comprises a precipitant, relative to the polymer in the polymer layer.

2. The method according to claim 1, wherein the polymer solution comprises 10 to 35 wt% of the (membrane-forming) polymer, 5 to 70 wt% of the high volatile solvent, 20 to 80 wt% of the low volatile solvent, and 0.1 to 15 wt% of a non-solvent, with respect to the total mass of the polymer solution.

3. The method according to claim 1 or 2, wherein the polymer is selected from the group consisting of polyethersulfone, polysulfone, polyphenylensulfone, polyetherimide, cellulose acetate, cellulose ester, and cellulose ether as well as combinations thereof.

4. The method according to any of claims 1 to 3, wherein the high volatile solvent is selected from the group consisting of acetone, formaldehyde, tetrahydrofuran, methyl acetate, methyl ethyl ketone, methyl formate, and ethyl formate as well as combinations thereof.

5. The method according to any of claims 1 to 4, wherein the low volatile solvent is selected from the group consisting of 2-pyrrolidone, N-methyl-2-pyrrolidone, N-n-butyl-2-pyrrolidone, dimethylacetamide, 2-hydroxy-N,N-dimethylpropanamide, dihydrolevoglucosenone, DMSO, and DMF as well as combinations thereof.

6. The method according to any of claims 1 to 5, wherein the non-solvent in the polymer solution is selected from the group consisting of water, glycerol, methanol, ethanol, n-propanol, iso-propanol as well as combinations thereof.

7. The method according to any of claims 1 to 6, wherein an evaporation time in step (c) is 0.50 s to 1.0 min.

8. The method according to any of claims 1 to 7, wherein the temperatures in steps (b) and (c) are each independently from 4°C to (boiling point of the high volatile solvent - 20%).

9. The method according to any of claims 1 to 8, further comprising the step of:
(e) introducing the polymer layer with the optional support layer into one or more rinsing tanks after step (d).

10. An ultrafiltration membrane obtained by the method for producing an ultrafiltration membrane according to any of claims 1 to 9.

11. The ultrafiltration membrane according to claim 10, wherein the membrane comprises a top portion and an asymmetrical membrane body portion, adjacent to the top portion,
the top portion and the membrane body portion are continuous within the membrane;
a first part of the membrane body portion, which is adjacent to the top portion, has an average pore size smaller than an average pore size of a second part of the membrane body portion, and the average pore size increases from the first part towards the second part of the asymmetrical membrane body portion; and
an average pore size of the top portion is smaller than an average pore size of the first part of the membrane body portion.

12. The ultrafiltration membrane according to claim 11, wherein the top portion corresponds to 5% or less of the thickness of the membrane and the membrane body portion corresponds to 95% or more of the thickness of the membrane.

13. The ultrafiltration membrane according to any of claims 10 to 12, wherein the membrane does not contain REACH materials.

14. The ultrafiltration membrane according to any of claims 10 to 13, wherein a ratio of average pore size between a first part of the membrane body portion, which is adjacent to the top portion, and a second opposite part of the membrane body portion is at least 1:10.
